# EUROPÄISCHE PATENTSCHRIFT

(11) **EP 3 656 024 B1**
(45) Veröffentlichungstag und Bekanntmachung des Hinweises auf die Patenterteilung: **19.04.2023**
(21) Anmeldenummer: 18750342.0
(22) Anmeldetag: 17.07.2018
(51) Int. Cl.: H01S 3/067

(54) **VERMEIDUNG VON MODENINSTABILITÄT IN EINER OPTISCHEN VERSTÄRKERFASER**
PREVENTING MODE INSTABILITY IN AN OPTICAL AMPLIFIER FIBRE
APPROCHE PERMETTANT D'ÉVITER UNE INSTABILITÉ DE MODES DANS UNE FIBRE AMPLIFICATRICE OPTIQUE

(30) Priorität: 17.07.2017 DE 102017116058; 14.09.2017 DE 102017121368
(43) Veröffentlichungstag der Anmeldung: 27.05.2020
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: STIHLER, Christoph, 07743 Jena (DE); JÁUREGUI MISAS, César, 07774 Dornburg-Camburg (DE); LIMPERT, Jens, 07751 Jena (DE); TÜNNERMANN, Andreas, 99425 Weimar (DE)
(74) Vertreter: Schneiders & Behrendt Bochum
(86) Internationale Anmeldenummer: PCT/EP2018/069383
(87) Internationale Veröffentlichungsnummer: WO 2019/016204

(56) Entgegenhaltungen:
- WO-A1-2016/128058
- KRISTIAN RYMANN HANSEN ET AL: "Thermo-optical effects in high-power Ytterbium-doped fiber amplifiers", OPTICS EXPRESS, Bd. 19, Nr. 24, 10. November 2011 (2011-11-10), Seite 23965, XP055513778, DOI: 10.1364/OE.19.023965
- HENRIK TÜNNERMANN ET AL: "Frequency resolved analysis of thermally induced refractive index changes in fiber amplifiers", OPTICS LETTERS, OPTICAL SOCIETY OF AMERICA, US, Bd. 37, Nr. 17, 1. September 2012 (2012-09-01), Seiten 3597-3599, XP001578078, ISSN: 0146-9592, DOI: 10.1364/OL.37.003597 [gefunden am 2012-08-24]

## Beschreibung

Die Erfindung betrifft ein Verfahren zur stabilen Übertragung von Laserstrahlung durch einen Lichtwellenleiter, gemäß Anspruch 1.

KRISTIAN RYMANN HANSEN ET AL: "Thermo-optical effects in high-power Ytterbiumdoped fiber amplifiers",OPTICS EXPRESS, Bd. 19, Nr. 24, 10. November 2011 (2011-11-10), Seite 23965, offenbart eine Untersuchung von thermo-optischen Effekten in optischen Hochleistungsverstärkerfasern und erwähnt, dass ein Phasenversatz zwischen dem Modeninterferenzmuster in der Faser und dem dadurch erzeugten thermischen Brechungsindexgitter eine Kopplung zwischen den Propagationsmoden in der Faser bewirkt und zu einem Energietransfer von der Fundamentalmode in der Faser in Richtung der höheren Moden führt und somit einen Energietransfer zwischen Grundmode und höheren Moden.

Außerdem betrifft die Erfindung eine Laser/Verstärker-Kombination mit einem Laser und einer Verstärkerfaser, gemäß Anspruch 12.

Bei Modeninstabilität wird eine durch den Lichtwellenleiter propagierende Laserstrahlung ab einer bestimmten Schwelle der Leistung der Laserstrahlung instabil, und Energie wird von einer Grundmode in Moden höherer Ordnung übertragen. Eine "stabile" Übertragung von Laserstrahlung liegt im Sinne der Erfindung entsprechend vor, wenn keine Modeninstabilität auftritt.

Die Weiterentwicklung von Faserlasern in jüngster Zeit hat dazu geführt, dass mit Seltenerdionen dotierte Lichtwellenleiter oder optische Fasern als aktives Medium ein zuverlässiges Konzept als Verstärker für beispielsweise Hochleistungslaser liefern. Die Entwicklung von Niedrigleistungslasern zu Hochleistungslasern für industrielle Anwendungen basiert auf der Fähigkeit von Lichtwellenleitern, hohe Leistung handhaben zu können. Das sehr große Verhältnis von Oberfläche zu aktivem Volumen erlaubt es, Wärme effizient abzuführen. Dies ist eine hervorragende Voraussetzung für einen Hochleistungsbetrieb.

Allerdings führen Bedingungen im Lichtwellenleiter zu anderen Problemen. So führt beispielsweise die Einschränkung des Lichtsignals auf den Kern des Lichtwellenleiters zu hoher Lichtintensität und zu Wechselwirkungen zwischen dem Material des Lichtwellenleiters und dem Lichtsignal. Dabei entstehen insbesondere auch schwer zu kontrollierende nicht-lineare Effekte. Damit wird die Signalqualität stark beeinträchtigt.

Lichtwellenleiter sollten demnach derart ausgelegt werden, dass nicht-lineare Effekte und Wechselwirkungen mit dem Fasermaterial reduziert werden. Am einfachsten und effektivsten werden nicht-lineare Effekte durch ein Vergrößern des Durchmessers des Kerns reduziert. Dadurch wird zum einen die Intensität des Lichts im Kern reduziert und zum anderen kann, beispielsweise bei doppelmanteligen Lichtwellenleitern, die Absorption von Pumplicht erhöht werden. Aufgrund der verbesserten Absorption des Pumplichts kann der Lichtwellenleiter verkürzt werden und damit können nicht-lineare Effekte weiter reduziert werden.

Bei einem großen Kerndurchmesser des Lichtwellenleiters ist es allerdings schwierig, einen Singlemode-Betrieb oder auch einen Betrieb mit nur wenigen Moden umzusetzen, insbesondere im Hochleistungsbetrieb. Hierzu müssen zusätzliche Maßnahmen ergriffen werden, vor allem bei einer hohen thermischen Belastung.

Es hat sich allerdings gezeigt, dass einer Multimode-Betrieb zu Modeninstabilität bei hohen Leistungen führen kann. Dabei wird das Ausgangsignal des Lichtwellenleiters oder eines damit realisierten Faserlasers instabil, sobald eine Leistungsschwelle überschritten wird. Es wird Energie von einer Grundmode in Moden höherer Ordnung übertragen. Das z.B. ursprünglich stabil gaußförmige Strahlprofil der im Lichtwellenleiter propagierenden Strahlung beginnt sich zu verändern und das Strahlprofil fluktuiert zeitlich aufgrund einer zeitlich veränderlichen Überlagerung der Grundmode mit einer oder mehreren Moden höherer Ordnung. Das Zeitverhalten dieser Fluktuationen kann deterministisch oder, je nach Leistung der propagierenden Strahlung, auch zufällig oder chaotisch sein.

Diese Modeninstabilität beeinträchtigt empfindlich die Strahlqualität und damit die Anwendung von Faserlaser-Konzepten bei höchsten Leistungen (typ. im kW-Bereich).

Als Ursache für die Modeninstabilität werden thermooptische Effekte, nämlich temperaturinduzierte lokale Veränderungen des Brechungsindex des Materials des Lichtwellenleiters angesehen, welche durch Modeninterferenz, d.h. durch Interferenz der unterschiedlichen im Lichtwellenleiter propagierenden Moden, verursacht werden (siehe Jauregui et al., Opt. Express 19, 2011, Seiten 3258 bis 3271). Zwei oder mehr (transversale) Moden der in dem Lichtwellenleiter propagierenden Laserstrahlung interferieren miteinander und bilden dabei ein räumliches Modeninterferenzmuster in dem Lichtwellenleiter aus. Die sich dadurch ergebende räumliche Intensitätsverteilung der Laserstrahlung induziert thermisch ein Brechungsindexgitter in dem Lichtwellenleiter. Dieses wiederum ist für das Auftreten von Energieübertragung zwischen den Moden und damit für die bei hohen Leistungen zu beobachtende Modeninstabilität verantwortlich.

Aus dem Stand der Technik sind verschiedene Ansätze bekannt, um Modeninstabilität zu vermeiden (siehe Jauregui et al, "Simplified modelling the mode instability threshold of high power fiber amplifiers in the presence of photodarkening,", Opt. Express 23, 20203, 2015; Smith et al, "Increasing mode instability thresholds of fiber amplifiers by gain saturation" , Opt. Express 21, 15168, 2013; Jauregui et al, "Passive mitigation strategies for mode instabilities in high-power fiber laser systems", Opt. Express 21, 19375, 2013; Eidam et al, "Preferential gain photonic-crystal fiber for mode stabilization at high average powers" , Opt. Express 19, 3656, 2011; Otto et al "Controlling mode instabilities by dynamic mode excitation with an acousto-optic deflector", Opt. Express 21, 17235, 2013; WO 2013/152862 A1).

Aufgabe der Erfindung ist es, einen weiteren, effektiven Ansatz aufzuzeigen, um das Ausgangsignal des Lichtwellenleiters in einer faserbasierten Laser-/Verstärkerkombination bei hohen Ausgangsleistungen zu stabilisieren, d.h. Modeninstabilität zu vermeiden.

Die Erfindung löst die Aufgabe ausgehend von einem Verfahren der eingangs angegebenen Art dadurch, dass in Propagationsrichtung der Laserstrahlung eine relative räumliche Phasenverschiebung zwischen dem Modeninterferenzmuster und dem thermisch induzierten Brechungsgitter eingestellt wird, wie in Anspruch 1 dargestellt.

Die Erfindung basiert auf der Erkenntnis, dass der Energietransfer zwischen den in dem Lichtwellenleiter propagierenden Moden der Laserstrahlung von der (räumlichen) Phasenbeziehung zwischen dem Modeninterferenzmuster und dem thermisch induzierten Brechungsindexgitter abhängt. Erfindungsgemäß wird idealerweise die relative Phasenverschiebung so eingestellt, dass sie zeitlich konstant ist. So kann dafür gesorgt werden, dass zu keinem Zeitpunkt Modeninstabilität auftritt, d.h. dass der Energietransfer nur in einer Richtung (z.B. zur Grundmode) erfolgt, d.h. die Laserstrahlung z.B. am Ausgang eines Faserlasers eine zeitlich konstante Leistung und ein zeitlich konstantes Strahlprofil hat.

Bei einer möglichen Ausgestaltung des erfindungsgemäßen Verfahrens wird die Laserstrahlung in einem Burst-Betrieb in den Lichtwellenleiter eingekoppelt wobei die Wiederholungsfrequenz der Strahlungsbursts 50 Hz bis 30 kHz, vorzugsweise 200 Hz bis 10 kHz beträgt. Burst-Betrieb bedeutet, dass die Laserstrahlung zeitlich intermittierend in den Lichtwellenleiter eingekoppelt wird, z.B. indem ein Laser, der die in den Lichtwellenleiter eingekoppelte Laserstrahlung erzeugt, periodisch ein- und ausgeschaltet oder dessen Strahlung anderweitig zeitlich moduliert wird. Während die Laserstrahlung eingeschaltet ist, erwärmt sich der Lichtwellenleiter. Dabei verändert sich die Phasenbeziehung zwischen dem Modeninterferenzmuster und dem thermisch induzierten Brechungsgitter. Wird die Laserstrahlung wieder ausgeschaltet, kühlt der Wellenleiter ab und die Phasenbeziehung kehrt, nach einer gewissen Zeit, zum ursprünglichen Zustand zurück. Die Laserstrahlung kann gezielt so ein- und ausgeschaltet werden, d.h. das Timing der Bursts kann gezielt so gewählt werden, dass dabei die Phasenverschiebung stets außerhalb eines Bereiches bleibt, in dem der unerwünschte Energietransfer von der Grundmode in Moden höherer Ordnung stattfindet.

Alternativ kann die relative räumliche Phasenverschiebung dadurch eingestellt werden, dass das Modeninterferenzmuster der Laserstrahlung nur in einer Richtung entlang des Lichtwellenleiters wandert. Wenn sich das Modeninterferenzmuster entlang des Lichtwellenleiters bewegt, folgt das thermisch induzierte Brechungsindexgitter entsprechend dieser Bewegung nach. Die Geschwindigkeit dieser Bewegung ist durch die thermischen Eigenschaften des Lichtwellenleiters bestimmt. Bei geeigneter Einstellung der Parameter, d.h. der Geschwindigkeit der Bewegung des Modeninterferenzmusters durch den Lichtwellenleiter, kann erreicht werden, dass die relative räumliche Phasenverschiebung zwischen dem wandernden Modeninterferenzmuster und dem nachfolgenden thermisch induzierten Brechungsindexgitter zeitlich konstant bleibt, und zwar z.B. in einem Bereich, in dem Energietransfer nur in die Grundmode stattfindet. Bei Bedarf kann die Energietransferrichtung auch so eingestellt werden, dass nur Energietransfer in Moden höherer Ordnung stattfindet. Die Strahlung am Ausgang des Lichtwellenleiters kann damit nach Wunsch zwischen verschiedenen Moden umgeschaltet werden.

Das wandernde Modeninterferenzmuster kann z.B. dadurch erzeugt werden, dass die in den Lichtwellenleiter eingekoppelte Laserstrahlung wenigstens zwei transversale Moden des Lichtwellenleiters anregt, die sich hinsichtlich ihrer Zentralfrequenz voneinander unterscheiden. Dabei sollte der Unterschied der Zentralfrequenzen der wenigstens zwei Moden nicht mehr als 50 kHz betragen.

Alternativ kann das wandernde Modeninterferenzmuster auch dadurch erzeugt werden, dass die in den Lichtwellenleiter eingekoppelte Laserstrahlung ein im Strahlquerschnitt zeitlich veränderliches Intensitäts- und Phasenprofil aufweist. Hierzu können z.B. ein digitaler Mikrospiegel (engl. "digital micro mirror device" - DMD) oder eine sog. "Photonic Lantern" verwendet werden, wodurch die Strahlung eines Laser modifiziert wird, bevor sie in den Lichtwellenleiter eingekoppelt wird.

Bevorzugt ist der Lichtwellenleiter optisch gepumpt, wodurch die Laserstrahlung während der Propagation durch den Lichtwellenleiter verstärkt wird. Hierzu kann der Lichtwellenleiter z.B. mit Seltenerdionen dotiert sein. Alternativ kann die im Lichtwellenleiter propagierende Laserstrahlung durch inelastische Streueffekte, wie Raman- oder Brillouin-Streuung, verstärkt werden. Ebenso ist denkbar, dass die im Lichtwellenleiter propagierende Laserstrahlung durch einen optisch parametrischen Prozess verstärkt wird.

Damit lässt sich eine auf dem erfindungsgemäßen Ansatz basierende Laser/Verstärker-Kombination realisieren, mit einem Laser und einer Verstärkerfaser als Lichtwellenleiter, wobei der Lichtwellenleiter die darin propagierende Strahlung des Lasers verstärkt, wobei zwei oder mehr Moden der in dem Lichtwellenleiter propagierenden Laserstrahlung interferieren und ein Modeninterferenzmuster in dem Lichtwellenleiter ausbilden, wodurch ein thermisch induziertes Brechungsindexgitter in dem Lichtwellenleiter erzeugt wird. Gemäß der Erfindung ist ein Stellelement vorgesehen, das in Propagationsrichtung der Laserstrahlung eine vorgebbare relative räumliche Phasenverschiebung des Modeninterferenzmusters und des thermisch induzierten Brechungsindexgitters erzeugt, um auf diese Weise Modeninstabilität zu unterdrücken.

Die mit Modeninstabilität zusammenhängenden Probleme treten, wie oben erläutert, bei besonders hohen Leistungen der verstärkten Laserstrahlung auf. Dies betrifft insbesondere den Leistungsbereich oberhalb einer mittleren Leistung von 100 W. Es lassen sich durch die Erfindung Laser/Verstärker-Kombinationen realisieren, bei denen die mittlere Leistung der verstärkten Laserstrahlung 100W, 1 kW, 10 kW oder sogar mehr beträgt, ohne dass Modeninstabilität auftritt.

Weitere Merkmale, Einzelheiten und Vorteile der Erfindung ergeben sich aus dem Wortlaut der Ansprüche sowie aus der nachfolgenden Beschreibung von Ausführungsbeispielen anhand der Figuren. Es zeigen:
- Figur 1: eine schematische Ansicht einer erfindungsgemäßen Laser/Verstärkerkombination als Blockdiagramm;
- Figur 2: schematisch den Einfluss der Phasenverschiebung zwischen dem Modeninterferenzmuster und dem thermisch induzierten Brechungsindexgitter auf den Energietransfer zwischen den Moden eines Lichtwellenleiters;
- Figur 3: schematisch die Auswirkung des erfindungsgemäßen Burst-Betriebes zur Einstellung der Phasenverschiebung zwischen dem Modeninterferenzmuster und dem thermisch induzierten Brechungsindexgitter;
- Figur 4: die Auswirkung eines wandernden Modeninterferenzmusters im Lichtwellenleiter;
- Figur 5: erfindungsgemäße Laser/-Verstärkerkombination mit detaillierter Darstellung des Stellelementes zur Einstellung der Phasenverschiebung zwischen dem Modeninterferenzmuster und dem thermisch induzierten Brechungsindexgitter als Blockdiagramm;
- Figur 6: schematisch ein Seed-Lasersystems zur Erzeugung eines wandernden Modeninterferenzmusters im Wellenleiter.

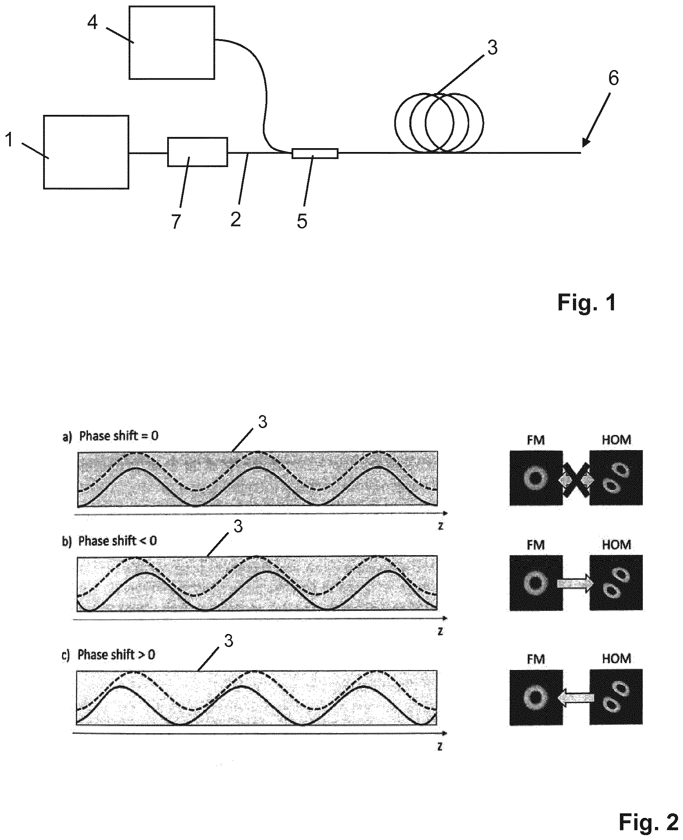

Die in der Figur 1 gezeigte Laser/Verstärker-Kombination umfasst einen Laser 1, vorzugsweise in Form eines Faserlasers, der Laserstrahlung bei geringer Intensität erzeugt und über eine Ankopplung an eine optische Faser 2 ausgibt. Bei dem Laser 1 kann es sich um einen Dauerstrichlaser oder auch um einen Pulslaser handeln. Die von dem Laser 1 erzeugte Strahlung propagiert - ggf. nach Durchlaufen einer oder mehrerer Vorverstärkerstufen (nicht dargestellt) - in einer Verstärkerfaser 3 (nachfolgend werden die Begriffe Lichtwellenleiter und optische Faser, Verstärkerfaser oder einfach Faser synonym verwendet) und wird darin bis auf die gewünschte Leistung verstärkt. Hierzu ist der die Laserstrahlung führende Kern der Verstärkerfaser 3 mit Seltenerdionen dotiert. Die Verstärkerfaser 3 wird mittels einer Pumplichtquelle 4 optisch gepumpt. Das Licht der Pumplichtquelle 4 wird über einen Koppler 5 in die Verstärkerfaser 3 in an sich bekannter Art und Weise eingekoppelt. Das Pumplicht propagiert dann gemeinsam mit der zu verstärkenden Laserstrahlung in der Verstärkerfaser 3. Die mittlere Leistung der Laserstrahlung am Ausgang 6 der Verstärkerfaser beträgt mehr als 100 W, gegebenenfalls sogar 10 kW oder mehr. Zwei oder mehr Moden der in der Verstärkerfaser 3 propagierenden Laserstrahlung interferieren und bilden ein Modeninterferenzmuster in der Verstärkerfaser 3 aus, wodurch in dieser ein thermisch induziertes Brechungsindexgitter erzeugt wird. Zur Vermeidung von Modeninstabilität ist der Verstärkerfaser 3 ist ein Stellelement 7 vorgeschaltet, das in Propagationsrichtung der Laserstrahlung in der Verstärkerfaser 3 eine vorgebbare relative räumliche Phasenverschiebung zwischen dem Modeninterferenzmuster und dem thermisch induzierten Brechungsindexgitter erzeugt.

Das Grundprinzip der erfindungsgemäßen Vermeidung von Modeninstabilität wird nachfolgend näher erläutert.

Wenn zwei (transversale) Moden gleichzeitig in einer optischen Faser angeregt werden, breiten sie sich darin aus zu einem dreidimensionalen Modeninterferenzmuster. Dieses wiederum generiert eine Wärmebelastung der Faser, deren räumliche Verteilung das Modeninterferenzmuster nachahmt. Daraus resultiert ein räumlich quasi-periodisches Temperaturprofil in der Faser, das über den thermo-optischen Effekt schließlich in eine entsprechend quasiperiodische Brechungsindexänderung, d.h. ein Brechungsindexgitter übersetzt wird. Ein solches Gitter ist hinsichtlich Symmetrie und Periodizität dazu geeignet, Energie zwischen den in der Faser propagierenden Moden der Laserstrahlung zu übertragen, was letztlich zu unerwünschter Modeninstabilität führt. Damit dieser Energieaustausch tatsächlich stattfinden kann, muss allerdings eine zusätzliche Bedingung erfüllt sein: Es muss eine Phasenverschiebung zwischen dem Modeninterferenzmuster und dem thermisch induzierten Brechungsindexgitter vorliegen. Der Wert und das Vorzeichen dieser Phasenverschiebung bestimmen dabei das Ausmaß und die Richtung des Energietransfers, wie in Fig. 2 schematisch dargestellt. In den Diagrammen repräsentiert die gestrichelte Kurve jeweils das thermisch induzierte Brechungsindexmuster und die durchgezogene Kurve das Modeninterferenzmuster in der optischen Faser 3. Wenn, wie im Diagramm der Fig. 2a gezeigt, das thermisch induzierte Brechungsindexgitter und das Modeninterferenzmuster vollständig in Phase sind, d.h. die Phasenverschiebung gleich null ist, dann ist kein Energieaustausch zwischen den Moden möglich, unabhängig von der Beschaffenheit und Ausprägung des Brechungsindexgitters. Wenn demgegenüber, wie in Fig. 2b gezeigt, die Maxima des Modeninterferenzmusters verzögert sind (verschoben in Propagationsrichtung der Laserstrahlung) in Bezug auf diejenigen des thermisch induzierten Brechungsindexgitters, d.h. eine negative Phasenverschiebung vorliegt, wird Energie aus der Grundmode (FM) in Richtung höherer Moden (HOM) übertragen. Wenn die Maxima des Modeninterferenzmusters vorauseilen (gegenüber dem Brechungsindexgitter entgegen der Propagationsrichtung der Laserstrahlung verschoben sind), d.h. eine positive Phasenverschiebung vorliegt, wird die Energie aus den HOM in die FM übertragen.

Eine Möglichkeit, Modeninstabilität zu vermeiden, wäre also sicherzustellen, dass die Phasenverschiebung immer exakt gleich Null ist. Dies ist praktisch aber kaum umsetzbar, da bei höherer Leistung die Ausprägung des thermisch induzierten Brechungsindexgitters zunimmt und bereits geringe Fluktuationen der Phasenverschiebung eine signifikante Energieübertragung zur Folge haben. Eine effektivere Möglichkeit, Modeninstabilität zu unterdrücken, ist es, die Energieübertragung in Richtung der FM (d.h. entsprechend der Situation in Fig. 2c) zu forcieren. In dieser Weise wird unabhängig von den Modencharakteristiken der Faser ein einmodiger (grundmodiger) Strahl am Ausgang der Faser erzielt, der eine hohe Strahlqualität, d.h. ohne Modeninstabilität, aufweist. Dies entspricht dem Ansatz der Erfindung: Die Phasenverschiebung zwischen dem Modeninterferenzmuster und dem thermisch induzierten Brechungsindexgitter so einzustellen, dass der Energietransfer in Richtung der gewünschten Mode der Faser (typischerweise die FM) erzwungen wird.

Zur praktischen Umsetzung dieses Ansatzes eignen sich z.B. die im Folgenden dargestellten Methoden.

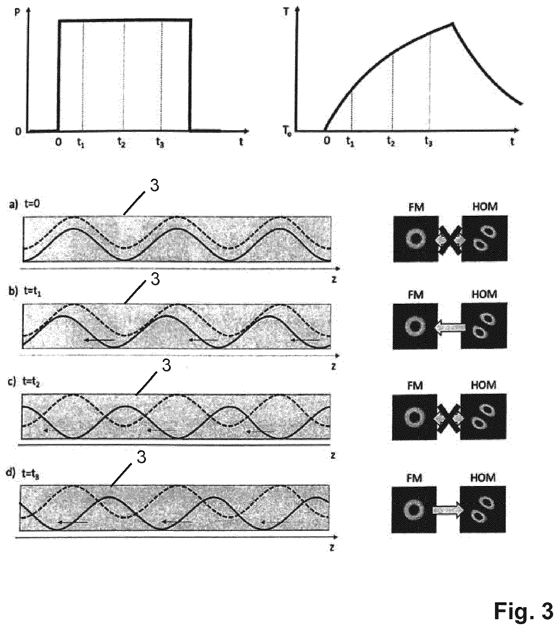

Wie oben erwähnt, ist eine Möglichkeit, eine gewünschte (insbesondere positive) Phasenverschiebung zwischen Modeninterferenzmuster und Brechungsindexgitter zu erzeugen, die Laserstrahlung in einem Burst-Betrieb in den Lichtwellenleiter 3 einzukoppeln. Dies ist in Fig. 3 illustriert. Das linke Diagramm oben in Fig. 3 zeigt den Zeitverlauf der Leistung der in den Lichtwellenleiter 3 eingekoppelten Laserstrahlung. Der Strahlungsburst beginnt bei t=0. Die Strahlungsbursts haben typischerweise eine Dauer von einigen hundert Mikrosekunden. Zur Veranschaulichung wird davon ausgegangen, dass vor dem Beginn eines Bursts das Modeninterferenzmuster und das thermisch induzierte Brechungsindexgitter in Phase sind (Fig. 3a). Wenn die Wiederholungsfrequenz der Strahlungsbursts in einem geeigneten Bereich liegt (typ. 50 Hz bis 30 kHz), dann ergibt sich in der Faser 3 der in dem Diagramm oben rechts in Fig. 3 gezeigte zeitliche Temperaturverlauf. Bei t=0 beginnt die mittlere Temperatur in der Faser zu steigen. Dies führt zu einer räumlichen Kompression des Modeninterferenzmusters, woraus wiederum eine positive relative Phasenverschiebung gegenüber dem thermisch induzierten Brechungsindexgitter (Fig. 3b) resultiert. Dies entspricht der oben in Bezug auf die Fig. 2c beschriebenen Situation, bei der die Energie in Richtung der FM der Faser transferiert wird. Diese Situation der "Strahlreinigung" wird über einen gewissen Zeitraum aufrechterhalten, abhängig von der jeweiligen Faser und der Ausgangsleistung typischerweise in der Größenordnung von einigen hundert Mikrosekunden. Während dieser Zeit wächst die durchschnittliche Temperatur in der Faser weiter an und die Phasenverschiebung wird entsprechend immer größer. Dies geschieht bis zu einem gewissen Zeitpunkt (t = t₂ in Fig. 3), zu dem das Modeninterferenzmuster um eine halbe Periodenlänge verschoben ist und der modale Energietransfer stoppt (Fig. 3c). Die Temperatur wächst danach noch weiter und auch die Phasenverschiebung wird größer, so dass der modale Energietransfer umgekehrt wird (da die Phasenverschiebung effektiv negativ wird) und die Energie ab Zeitpunkt t=t₃ zu den HOM fließt (Fig. 3d). Nach dem Ende des Bursts kühlt die Faser 3 ab, die durchschnittliche Temperatur sinkt. Erfindungsgemäß sollte sichergestellt werden, dass der Burst so kurz gehalten wird (kürzer als t₂), dass nur Strahlreinigung stattfindet, d.h. die Phasenverschiebung positiv bleibt, damit die Situation der Fig. 3d nicht erreicht wird. Das funktioniert, weil die durchschnittliche Temperatur in der Faser 3 sich schneller ändern kann als die ansteigenden transversalen Temperaturinhomogenitäten, die das Brechungsindexgitter induzieren. Daher gibt es im Burst-Betrieb ein bestimmtes Zeitfenster der Dauer t₂ (abhängig von der jeweiligen Faser und von der Ausgangsleistung), bei dem der Großteil der Energie in der FM der Faser 3 enthalten ist. Dies ermöglicht einen Betrieb mit beugungsbegrenzter Strahlqualität deutlich oberhalb der Schwelle, ab der normalerweise, d.h. ohne die erfindungsgemäßen Maßnahmen, Modeninstabilität einsetzt. Da die Dauer des Bursts auf t₂ begrenzt ist, ist die einzige Möglichkeit, die von dem Laser emittierte durchschnittliche Leistung zu erhöhen, die Wiederholrate zu erhöhen. Diese ist jedoch ebenfalls begrenzt, da die Zeit zwischen aufeinanderfolgenden Bursts nicht zu kurz werden darf. Ansonsten tritt ein signifikanter thermischer Übersprechvorgang auf und die anfängliche Phasenverschiebung geht nicht auf null zurück. Dieser Zustand sollte aber erreicht werden, da damit die Burstdauer maximal werden kann. Zu lang darf der Zeitabstand zwischen den Bursts ebenfalls nicht werden, weil dann das thermisch induzierte Brechungsindexgitter ganz verschwindet. Dieser Zustand ist erfindungsgemäß nicht erwünscht.

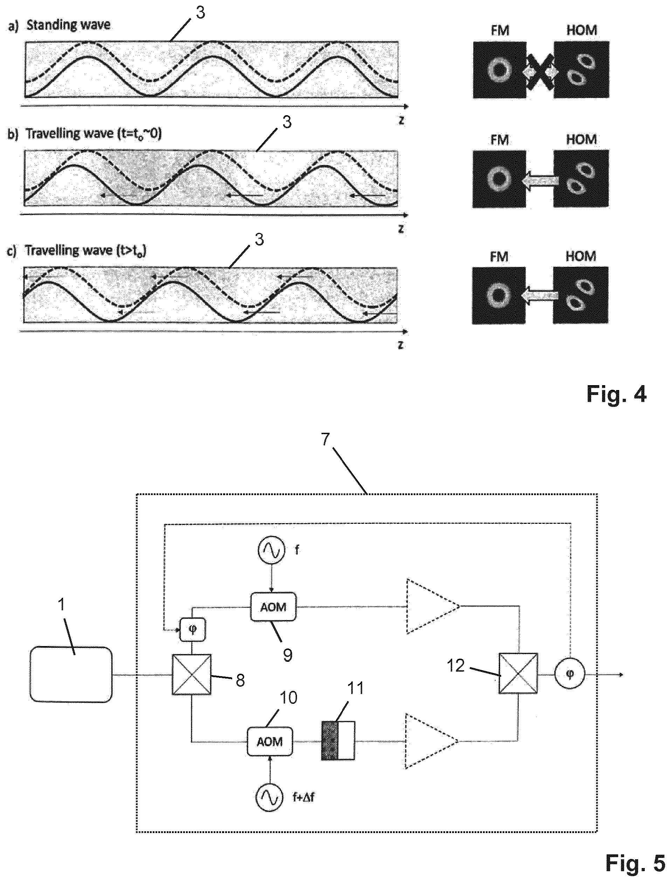

Eine weitere Ausführungsform der Erfindung sieht vor, dass die relative räumliche Phasenverschiebung dadurch eingestellt wird, dass das Modeninterferenzmuster der Laserstrahlung entlang der Propagationsrichtung in der Faser 3 wandert. Dieses Prinzip wird nachfolgend anhand der Fig. 4 erläutert. Bei einem stehenden Modeninterferenzmuster ist die relative Phasenverschiebung gleich null, und es findet kein Energietransfer zwischen den Moden statt. Dies ist in Fig. 4a gezeigt. Wenn das Modeninterferenzmuster beginnt, sich mit einer konstanten Geschwindigkeit zu bewegen (Fig. 4b), stellt sich eine bestimmte Phasenverschiebung ein, bis das thermisch induzierte Brechungsindexgitter beginnt, der Bewegung des Modeninterferenzmusters (verzögert) mit der gleichen Geschwindigkeit zu folgen. Daraus resultiert eine zeitlich stabile Phasenverschiebung und damit ein konstanter Energiefluss zwischen den Fasermoden (Fig. 4c). Der absolute Wert der Phasenverschiebung kann durch die Geschwindigkeit der Bewegung des Modeninterferenzmusters gesteuert werden. Durch die Bewegungsrichtung kann das Vorzeichen der Phasenverschiebung bestimmt werden und damit die Richtung des Energietransfers. Dies ermöglicht es, am Ausgang der Faser 3 zwischen den verschiedenen Moden (FM, HOM) umzuschalten. Die Geschwindigkeit der Bewegung des Modeninterferenzmusters steuert, wie zuvor erwähnt, die Phasenverschiebung. Wenn diese Bewegungsgeschwindigkeit zu niedrig ist, ist die resultierende Phasenverschiebung nahe null, und es wird nur eine schwache Energieübertragung zwischen den Fasermoden stattfinden. Wenn die Geschwindigkeit erhöht wird, wird die Übertragung stärker, und eine stabile Phasenverschiebung entwickelt sich zwischen dem thermisch induzierten Brechungsindexgitter und dem modalen Interferenzintensitätsmuster, wie oben beschrieben. Dies ist möglich bis zu einer Obergrenze der Bewegungsgeschwindigkeit. Von dieser Geschwindigkeit an ist das Brechungsindexprofil nicht mehr in der Lage, dem Modeninterferenzmuster zu folgen. Das bedeutet, dass sich keine stabile Phasenverschiebung einstellt.

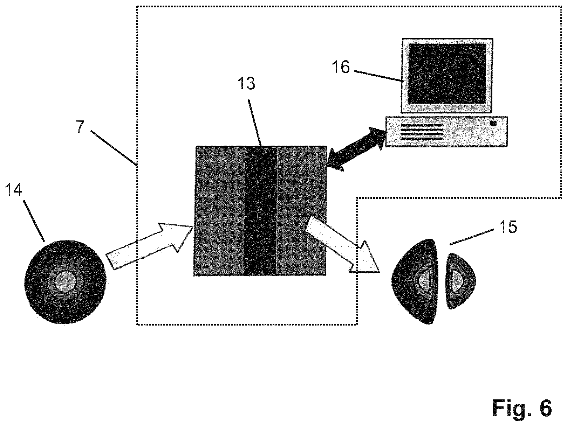

Im Folgenden werden zwei beispielhafte Möglichkeiten beschrieben, ein in der Faser 3 wanderndes Modeninterferenzmuster mittels eines erfindungsgemäßen Stellelementes 7 zu erzeugen. Das anhand der Fig. 5 erläuterte Ausführungsbeispiel basiert auf der zeitlich modulierten Interferenz von zwei Laserstrahlen, die in die Faser 3 eingekoppelt werden. Das Ausführungsbeispiel der Fig. 6 verwendet eine direkte Strahlformung vor der Einkopplung.

Ein wanderndes Modeninterferenzmuster bildet sich in der Faser 3 aus, wenn die FM und die HOM der in der Faser 3 propagierenden Laserstrahlung leicht unterschiedliche Zentralfrequenzen aufweisen. Dabei gibt der absolute Wert der Frequenzdifferenz zwischen den Moden die Geschwindigkeit des wandernden Modeninterferenzmusters und das Vorzeichen die Bewegungsrichtung vor. Die Schwierigkeit bei diesem Ansatz besteht darin, bei der Einkopplung der Laserstrahlung in die Faser 3 zwei Moden bei leicht unterschiedlichen Frequenzen anzuregen.

Das in der Fig. 5 illustrierte Stellelement 7 geht aus von der Strahlung des Lasers 1 der einen der FM entsprechenden Laserstrahl am Ausgang liefert. Dieser Strahl trifft auf einen Strahlteiler 8 und wird auf zwei Strahlzweige aufgespalten. In jedem der räumlich getrennten Zweigen findet eine Frequenzverschiebung mittels akusto-optischer Modulatoren (AOMs) 9, 10 statt. Die beiden AOMs 9, 10 werden mit leicht unterschiedlichen Frequenzen (f und f + Δf) getrieben. In einem der Strahlengänge befindet sich ein Modenwandler 11, z.B. eine Phasenplatte, die den ankommenden gaußförmigen Strahl in einen Strahl mit einem Profil formt, das einer HOM der (in Fig. 5 nicht dargestellten) Faser 3 nahekommt. Wahlweise kann eine gewisse Verstärkung der Strahlen in den beiden Zweigen durchgeführt werden, bevor die beiden Strahlen in einem weiteren Strahlteiler 12 wieder überlagert und dann in die Faser 3 eingekoppelt werden. Da die Strahlintensität und die Phasenprofile, die über die beiden Zweige kommen, unterschiedlich sind und mit leicht unterschiedlichen Frequenzen moduliert werden, ist das Ergebnis der Überlagerung ein zeitlich variables Strahlprofil. Dies ist genau das, was erforderlich ist, um ein bewegliches Modeninterferenzmuster in der Faser 3 zu schaffen. Das in der Figur 5 dargestellte Ausführungsbeispiel umfasst zusätzlich einen Phasenregelkreis zum Zwecke der aktiven Stabilisierung.

Ein alternativer Ansatz zur Erzeugung eines wandernden Modeninterferenzmusters ist, dass am Eingang der Faser 3 direkt der entsprechend modulierte Strahl reproduziert wird, der bei dem Ausführungsbeispiel der Figur 5 am Ausgang des Strahlteilers 12 entsteht. Dies ist in Figur 6 gezeigt. Das dargestellte Stellelement 7 umfasst zur Strahlkonformation eine digitale Mikrospiegelvorrichtung (DMD) 13, an der der vom Laser 1 (in Figur 6 nicht dargestellt) kommende Laserstrahl 14 reflektiert wird und dann als Laserstrahl 15 mit dem schematisch angedeuteten Strahlprofil in die Faser 3 (in Figur 6 ebenfalls nicht dargestellt) eingekoppelt wird. Ein Computer 16 steuert das DMD 13 so an, dass ein zeitlich variables Strahlprofil erzeugt wird, entsprechend der erforderlichen momentanen Strahlintensität und des Phasenprofils, um die beiden Moden anzuregen, wie oben beschrieben. Das DMD 13 muss dazu in der Lage sein, sowohl das Phasen- als auch das Intensitätsprofil des Strahls 15 mit hinreichend hoher Auflösung und Bildrate (mehrere zehn kHz) zu erzeugen.

## Patentansprüche

1. Verfahren zur stabilen Übertragung von Laserstrahlung durch einen Lichtwellenleiter (3), wobei zwei oder mehr Moden der in dem Lichtwellenleiter (3) propagierenden Laserstrahlung interferieren und ein Modeninterferenzmuster in dem Lichtwellenleiter ausbilden, wodurch ein thermisch induziertes Brechungsindexgitter in dem Lichtwellenleiter (3) erzeugt wird,
**dadurch gekennzeichnet, dass** in Propagationsrichtung der Laserstrahlung eine relative räumliche Phasenverschiebung zwischen dem Modeninterferenzmuster und dem thermisch induzierten Brechungsindexgitter mithilfe eines Stellelementes (7) so eingestellt wird, dass ein Energietransfer zwischen den Moden der in dem Lichtwellenleiter (3) propagierenden Laserstrahlung in Richtung zur Grundmode erfolgt.

2. Verfahren nach Anspruch 1, **dadurch gekennzeichnet, dass** die relative Phasenverschiebung zeitlich konstant ist.

3. Verfahren nach Anspruch 1, **dadurch gekennzeichnet, dass** die Laserstrahlung in einem Burst-Betrieb in den Lichtwellenleiter (3) eingekoppelt wird, wobei die Wiederholungsfrequenz der Strahlungsbursts 50 Hz bis 30 kHz, vorzugsweise 200 Hz bis 10 kHz beträgt.

4. Verfahren nach Anspruch 1 oder 2, **dadurch gekennzeichnet, dass** die relative räumliche Phasenverschiebung dadurch eingestellt wird, dass das Modeninterferenzmuster der Laserstrahlung entlang der Propagationsrichtung wandert.

5. Verfahren nach Anspruch 4, **dadurch gekennzeichnet, dass** das wandernde Modeninterferenzmuster dadurch erzeugt wird, dass die in den Lichtwellenleiter (3) eingekoppelte Laserstrahlung wenigstens zwei transversale Moden des Lichtwellenleiters umfasst, die sich hinsichtlich ihrer Zentralfrequenz voneinander unterscheiden.

6. Verfahren nach Anspruch 5, **dadurch gekennzeichnet, dass** der Unterschied der Zentralfrequenzen der wenigstens zwei Moden nicht mehr als 50 kHz beträgt.

7. Verfahren nach einem der Ansprüche 4 bis 6, **dadurch gekennzeichnet, dass** die in den Lichtwellenleiter (3) eingekoppelte Laserstrahlung ein im Strahlquerschnitt zeitlich veränderliches Intensitäts- und Phasenprofil aufweist.

8. Verfahren nach einem der Ansprüche 1 bis 7, **dadurch gekennzeichnet, dass** der Lichtwellenleiter (3) optisch gepumpt wird, wodurch die Laserstrahlung während der Propagation durch den Lichtwellenleiter (3) verstärkt wird.

9. Verfahren nach einem der Ansprüche 1 bis 8, **dadurch gekennzeichnet, dass** der Lichtwellenleiter (3) mit Seltenerdionen dotiert ist.

10. Verfahren nach einem der Ansprüche 1 bis 8, **dadurch gekennzeichnet, dass** die im Lichtwellenleiter (3) propagierende Laserstrahlung durch inelastische Streueffekte, wie Raman- oder Brillouin-Streuung, verstärkt wird.

11. Verfahren nach einem der Ansprüche 1 bis 8, **dadurch gekennzeichnet, dass** die im Lichtwellenleiter (3) propagierende Laserstrahlung durch einen optisch parametrischen Prozess verstärkt wird.

12. Laser/Verstärker-Kombination mit einem Laser (1) und einem Lichtwellenleiter (3) in Form einer Verstärkerfaser, wobei der Lichtwellenleiter (3) die darin propagierende Strahlung des Lasers (1) verstärkt, wobei zwei oder mehr Moden der in der Lichtwellenleiter (3) propagierenden Laserstrahlung interferieren und ein Modeninterferenzmuster in dem Lichtwellenleiter (3) ausbilden, wodurch ein thermisch induziertes Brechungsindexgitter in dem Lichtwellenleiter (3) erzeugt wird,
**gekennzeichnet durch** ein Stellelement (7), das in Propagationsrichtung der Laserstrahlung eine vorgebbare relative räumliche Phasenverschiebung des Modeninterferenzmusters und des thermisch induzierten Brechungsindexgitters erzeugt, in der Weise, dass ein Energietransfer zwischen den Moden der in dem Lichtwellenleiter (3) propagierenden Laserstrahlung in Richtung zur Grundmode erfolgt.

## Claims

1. Method for the stable transmission of laser radiation through an optical waveguide (3), wherein two or more modes of the laser radiation propagating in the optical waveguide (3) interfere and form a mode interference pattern in the optical waveguide, as a result of which a thermally induced refractive index grating is generated in the optical waveguide (3),
**characterized in that**
a relative spatial phase shift between the mode interference pattern and the thermally induced refractive index grating is set in the direction of propagation of the laser radiation using a setting element (7) in such a way that an energy transfer between the modes of the laser radiation propagating the optical waveguide (3) occurs in the direction of the dominant mode.

2. Method according to claim 1, **characterized in that** the relative phase shift is constant over time.

3. Method according to claim 1, **characterized in that** the laser radiation is coupled into the optical waveguide (3) in a burst mode, wherein the repetition frequency of the radiation bursts are 50 Hz to 30 kHz, preferably 200 Hz to 10 kHz.

4. Method according to claim 1 or 2, **characterized in that** the relative spatial phase shift is adjusted by the mode interference pattern of the laser radiation migrating along the propagation direction.

5. Method according to claim 4, **characterized in that** the migrating mode interference pattern is generated **in that** the laser radiation coupled into the optical waveguide (3) comprises at least two transverse modes of the optical waveguide which differ from one another with regard to their central frequency.

6. Method according to claim 5, **characterized in that** the difference in the central frequencies of the at least two modes is no more than 50 kHz.

7. Method according to one of claims 4 to 6, **characterized in that** the laser radiation coupled into the optical waveguide (3) has an intensity and phase profile that changes over time in the beam cross section.

8. Method according to one of claims 1 to 7, **characterized in that** the optical waveguide (3) is pumped optically, as a result of which the laser radiation is amplified during propagation through the optical waveguide (3).

9. Method according to one of claims 1 to 8, **characterized in that** the optical waveguide (3) is doped with rare earth ions.

10. Method according to one of claims 1 to 8, **characterized in that** the laser radiation propagating in the optical waveguide (3) is amplified by inelastic scattering effects such as Raman or Brillouin scattering.

11. Method according to one of claims 1 to 8, **characterized in that** the laser radiation propagating in the optical waveguide (3) is amplified by an optically parametric process.

12. Laser/amplifier combination with a laser (1) and an optical waveguide (3) in the form of an amplifier fiber, wherein the optical waveguide (3) amplifies the radiation of the laser (1) propagating therein, wherein two or more modes of the laser radiation propagating in the optical waveguide (3 ) interfere and form a mode interference pattern in the optical waveguide (3), whereby a thermally induced refractive index grating is generated in the optical waveguide (3),
**characterized by**
a setting element (7) which generates a definable relative spatial phase shift of the mode interference pattern and the thermally induced refractive index grating in the direction of propagation of the laser radiation in such a way that an energy transfer between the modes of the laser radiation propagating in the optical waveguide (3) occurs in the direction of the dominant mode.

## Revendications

1. Procédé servant à transmettre de manière stable un rayonnement laser à travers un guide d'ondes optiques (3), dans lequel deux modes ou plus du rayonnement laser se propageant dans le guide d'ondes optiques (3) interfèrent et forment un modèle d'interférence de modes dans le guide d'ondes optiques, moyennant quoi un réseau d'indice de réfraction thermiquement induit est généré dans le guide d'ondes optiques (3),
**caractérisé en ce que**
dans le sens de propagation du rayonnement laser, un déphasage spatial relatif entre le modèle d'interférence de modes et le réseau d'indice de réfraction thermiquement induit est réglé au moyen d'un élément de réglage (7) de telle manière qu'un transfert d'énergie entre les modes du rayonnement laser se propageant dans le guide d'ondes optiques (3) s'effectue dans la direction du mode fondamental.

2. Procédé selon la revendication 1, **caractérisé en ce que** le déphasage relatif est constant dans le temps.

3. Procédé selon la revendication 1, **caractérisé en ce que** le rayonnement laser est injecté dans le guide d'ondes optiques (3) selon un fonctionnement en salves, la fréquence de répétition des salves de rayonnement étant de 50 Hz à 30 kHz, de préférence de 200 Hz à 10 kHz.

4. Procédé selon la revendication 1 ou 2, **caractérisé en ce que** le déphasage spatial relatif est réglé par le déplacement du modèle d'interférence de modes du rayonnement laser le long du sens de propagation.

5. Procédé selon la revendication 4, **caractérisé en ce que** le modèle d'interférence de modes se déplaçant est généré par le fait que le rayonnement laser injecté dans le guide d'ondes optiques (3) comprend au moins deux modes transverses du guide d'ondes optiques, qui diffèrent l'un de l'autre en ce qui concerne leur fréquence centrale.

6. Procédé selon la revendication 5, **caractérisé en ce que** la différence entre les fréquences centrales des au moins deux modes n'est pas supérieure à 50 kHz.

7. Procédé selon l'une des revendications 4 à 6, **caractérisé en ce que** le rayonnement laser injecté dans le guide d'ondes optiques (3) présente un profil d'intensité et de phase dont la largeur du faisceau est variable dans le temps.

8. Procédé selon l'une des revendications 1 à 7, **caractérisé en ce que** le guide d'ondes optiques (3) est soumis à un pompage optique, moyennant quoi le rayonnement laser est amplifié pendant la propagation à travers le guide d'ondes optiques (3).

9. Procédé selon l'une des revendications 1 à 8, **caractérisé en ce que** le guide d'ondes optiques (3) est dopé avec des ions de terres rares.

10. Procédé selon l'une des revendications 1 à 8, **caractérisé en ce que** le rayonnement laser se propageant dans le guide d'ondes optiques (3) est amplifié par des effets de diffusion inélastique, tels que la diffusion Raman ou la diffusion Brillouin.

11. Procédé selon l'une des revendications 1 à 8, **caractérisé en ce que** le rayonnement laser se propageant dans le guide d'ondes optiques (3) est amplifié par un processus paramétrique optique.

12. Combinaison laser/amplificateur comprenant un laser (1) et un guide d'ondes optiques (3) sous la forme d'une fibre amplificatrice, le guide d'ondes optiques (3) amplifiant le rayonnement du laser (1) se propageant en lui, dans laquelle deux modes ou plus du rayonnement laser se propageant dans le guide d'ondes optiques (3) interfèrent et forment un modèle d'interférence de modes dans le guide d'ondes optiques (3), moyennant quoi un réseau d'indice de réfraction thermiquement induit est généré dans le guide d'ondes optiques (3),
**caractérisée par**
un élément de réglage (7), qui génère, dans le sens de propagation du rayonnement laser, un déphasage spatial relatif prédéfinissable du modèle d'interférence de modes et du réseau d'indice de réfraction thermiquement induit de telle manière qu'un transfert d'énergie entre les modes du rayonnement laser se propageant dans le guide d'ondes optiques (3) s'effectue dans la direction du mode fondamental.
